# EUROPEAN PATENT APPLICATION

(11) **EP 2 081 333 A1**
(43) Date of publication of application: **22.07.2009**
(21) Application number: 08000967.3
(22) Date of filing: 18.01.2008
(51) Int. Cl.: H04L 12/56

(54) **Assignment of IP adresses to extension devices in 3GPP mobile networks**

(71) Applicant: Nokia Siemens Networks Oy, 02610 Espoo (FI)
(72) Inventor: Meyer, Gerald, 82178 Puchheim-Bhf (DE); Seidl, Robert, 82549 Königsdorf (DE)
(74) Representative: Bruglachner, Thomas E.

(57) **Abstract**

A method of addressing an extension device of a mobile telecommunication system comprises the step of assigning an address for the extension device by the mobile station. The extension device is devoid of a subscriber identifier. The mobile telecommunication system comprises a core network and a mobile station. The mobile station is connected to the core network and to the extension device.

## Description

This invention relates to addressing of a device in a mobile telecommunication network.

It is known that mobile devices can be connected to a mobile operator network, such as a 3GPP network, through a WLAN (wireless local area network). A description of an interworking between the 3GPP network and the WLAN is shown in

3GPP TS 22.234, Requirements on 3GPP system to Wireless Local Area Network (WLAN) interworking,
http://www.3gpp.org/ftp/Specs/html-info/22234.htm.

The interworking between the WLAN and the 3GPP system is via a wireless IP connectivity service. A user obtains access to the wireless IP connectivity service using a UICC (Universal Integrated Circuit Card) or a SIM (subscriber identity module).

The 3GPP system is capable of interworking with one or more WLANs whilst the WLAN is capable of interworking with one or more 3GPP systems. In general, the WLAN can be an integral part of the 3GPP system or separate from the 3GPP system.

The application provides a mobile telecommunication system, which comprises a mobile station an means for assigning an address to an extension device. The extension device is devoid of a subscriber identifier. The mobile station is connected to a core network of the mobile telecommunication system.

It is thought that an extension device of a mobile telecommunication network can be assigned with an individual address. The address enables packet-based applications in the mobile telecommunication network to contact the extension device.

The extension device is connected to an existing 3GPP (Third Generation Partner Project) device of the mobile telecommunication network by a near field communication link. The 3GPP device is a type of a mobile station (MS). The extension device does not include a SIM (subscriber identity module) or an UICC (Universal Integrated Circuit Card).

A primary PDP (packet data protocol) context, which comprises an address, usually an IP address, can provide an access to the extension device from the mobile telecommunication network. Data packets, which originate from the mobile telecommunication network, and which include the address, are routed through the 3GPP device to the extension device. Other functionalities of the 3GPP device are not affected by the routing.

The address may comprise an IP address. The mobile telecommunication system may comprise a 3GPP mobile operator network. The core network may comprise a SGSN (Serving GPRS Support Node) and a GGSN (Gateway GPRS Support Node). The GGSN is connected to the SGSN. The mobile station may comprise a 3GPP device.

The subscriber identifier may comprise a SIM (subscriber identity module) or a UICC (Universal Integrated Circuit Card). The connection between the 3GPP device and the core network may be provided by a primary PDP context. The address may be provided by an address manager. The address manager may be unified with the GGSN to form a single entity.

A method of addressing an extension device of a mobile telecommunication system comprises the step of assigning an address for the extension device by the mobile station. The extension device is devoid of a subscriber identifier. The mobile telecommunication system comprises a core network and a mobile station. The mobile station is connected to the core network and to the extension device.

The address assigned for the extension device can be unique across the mobile telecommunication system. The connection between the mobile station and the core network may be provided by a primary PDP context.

The method may comprise the further step of performing a network address translation between a local IP address and a network-wide unique address for data packets received by the mobile station, and the address assigned for the extension device comprises the local IP address.

The mobile station may maintain an association between the network-wide unique IP address and the local IP address.

The method may comprise the further step of performing a network address and port translation between a local IP address and a port number for data packets, the data packets are received by the mobile station, the extension device is connected to the port, and the address assigned to the extension device comprises the local IP address.

The mobile station may store an association between the local IP address and the address of the mobile station together with the port number.

The method may comprise the further step of addressing the extension device by a connection provided by a secondary PDP context between the mobile station and the core network.

The address may be provided by an address manager. The address manager may provide context information for providing a connection between a network entity and the extension device.

The address that is provided for the extension device, which has neither the SIM nor the UICC, is distinct from an address of the existing 3GPP device. The address of the extension device enables customers of the mobile operator network to access packet-based services of the mobile operator network using the extension device.

The extension device can be directly addressed by specific service applications using a specific port number or using a PDP context. This makes it possible to play back, for example, a video data stream on one extension device, and for example, a voice data stream on another extension device. The appropriate extension device can be selected by the existing 3GPP device or by the mobile operator network.

An authorization for the extension device is simple since the extension device is accessed through the existing 3GPP device. Authorization for the existing 3GPP device can support the authorization for the extension device and bring the level of trust of the extension device to the same level of trust as the existing 3GPP device. The mobile operator network may need only to authorize an additional transmission path between the 3GPP device and the mobile operator network. The additional transmission path can be characterised by a PDP context or a port number. The authorization of the additional transmission path can be through a SIM-based or an UICC-based method.

An integration of the extension device into most network infrastructures is simple. The connection of the extension devices to the mobile operator network requires no basic change for most network infrastructure. An interface between the existing 3GPP device and the network can remain unchanged, in particular for the authentication of the existing 3GPP device. An interface between the extension device and the existing 3GPP device can be based on techniques for packet data transmission. Examples of the available techniques are IP (Internet protocol), TCP (Transmission Control Protocol), UDP (User Datagram Protocol), DHCP (Dynamic Host Configuration Protocol), HTTP (Hypertext Transfer Protocol), or SIP (session initiation protocol) using bearer connections, such as Bluetooth, IrDA (infrared data association), Ethernet, or WLAN (Wireless Local Area Network).
- Fig. 1: illustrates an addressing by a network-wide unique IP address by means of an additional primary PDP context,
- Fig. 2: illustrates the addressing by a local IP address and a port mapping,
- Fig. 3: illustrates the addressing by a separate secondary PDP context,
- Fig. 4: illustrates the addressing by a separate address manager for an extension device, and
- Fig. 5: illustrates a unifying of the extension address manager with a GGSN (Gateway GPRS Support Node).

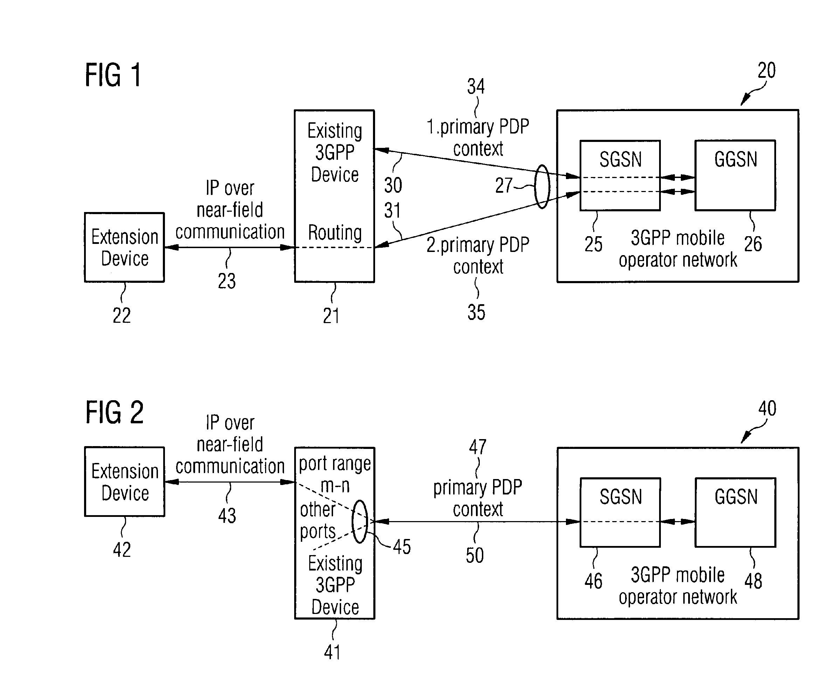

Fig. 1 illustrates an addressing by a network-wide unique IP address by means of an additional primary PDP context. The network-wide unique IP address is either assigned to an extension device or is utilised by an existing 3GPP device. If the existing 3GPP device utilises the network-wide unique IP address, a local IP address is assigned to the extension device. The local IP address is associated with the network-wide unique IP address.

Fig. 1 shows a 3GPP (Third Generation Partner Project) mobile operator network 20 with an existing 3GPP device 21 that is attached to the 3GPP mobile operator network 20 over a wireless communication channel 27. An extension device 22 is attached to the 3GPP device 21 over a near-field communication link 23.

The data packet network 20 includes a core network. The core network comprises a Serving GPRS Support Node (SGSN) 25, which is connected to a Gateway GPRS Support Node (GGSN) 26. The SGSN 25 has a communication link with the 3GPP device 21, via the wireless communication channel 27.

A data flow 30 is transmitted between the SGSN 25 and the 3GPP device 21 and between the SGSN 25 and the GGSN 26. The data flow 30 is transmitted through a connection that is provided by a primary PDP (packet data protocol) context 34. A session specifies a period between an opening and a closing of the connection.

Another data flow 31 is sent between the SGSN 25 and the GGSN 26, between the SGSN 25 and the 3GPP device 21, and between the 3GPP device 21 and the extension device 22. The data flow 31 is sent through another connection that is provided by an additional primary PDP context 35.

The GGSN 26 may send the data flow 30 or 31 to other network. The other network is not shown in the Fig. 1.

The 3GPP mobile operator network 20, as provided here, utilises data packets for voice or data communication. The core network provides mobility management, session management, and transport for IP packet services.

The SGSN 25 controls a communication connection between the 3GPP device 21 and the GGSN 26 and delivers data packets between the 3GPP device 21 and the GGSN 26. The SGSN 25 may maintain a data structure of PDP context, which contains a subscriber's session information during an active session.

The GGSN 26 acts as an interface to the other network. The other network may include a data network, which may be in the form of an Internet Protocol (IP) network, a X.25 network, or an inter-PLMN (Public Land Mobile Network) backbone network. The IP network may be in the form of the Internet or an intranet. The GGSN 26 converts data packets from the SGSN 25 into an appropriate packet-data protocol (PDP) format and sending them to the other network.

The 3GPP device 21 has a network interface for communicating with the extension device 22. The 3GPP device 21 receives data packets that are destined for the extension device 22 from the SGSN 25. The 3GPP device 21 also routes these data packets to the extension device 22.

Similarly, the 3GPP device 21 is also for receiving data packets that are destined for the SGSN 25, the GGSN 26, or the other network, from the extension device 22. The 3GPP device 21 is also for transmitting these data packets to the SGSN 25.

The 3GPP device 21 has a subscriber key or identifier for accessing services of the mobile operator network 20. This subscriber key is provided by a SIM (subscriber identity module) or a UICC. In contrast, the extension device 22 is without a SIM or a UICC.

The extension device 22 has a network interface for communicating with the 3GPP device 21 over a short distance.

The primary contexts 34 and 35 provide communication channels between the 3GPP device 21 and the SGSN 25 for data packet transfer. This transfer enables access to packet based application services, such as email. The primary contexts 34 and 35 include addresses.

In a generic sense, the 3GPP mobile operator network 20 is a type of a mobile telecommunication network and can be replaced by other types of the mobile telecommunication network. The 3GPP mobile operator network 20 may use a switched circuit technique for communication.

The 3GPP mobile operator network 20 can be a UMTS (Universal Mobile Telecommunications System) or GSM (Global System for Mobile Communications) network. European Telecommunication Standards Institute (ETSI) provides specifications for UMTS and GSM.

The 3GPP device 21 is a type of a mobile station (MS). The MS can be a wireless cellular phone or a portable device connected to a wireless modem for communication with the mobile operator network 20.

The SIM or the UICC are a form of a subscribe identifier for recognizing a subscriber. The identifier of the subscriber can also be provided by other means, such as an R-UIM (Removable User Identity Module), or a CSIM (CDMA Subscriber Identity Module).

In a first embodiment of Fig. 1, the extension device 22 is addressed by a network-wide unique IP address that is obtained by the additional primary PDP context 35. The extension device 22 is assigned with the network-wide unique IP address.

A method of addressing the extension device 22 by the network-wide unique IP address is described below.

Firstly, an activation of the primary PDP context 34 provides a communication link between the 3GPP device 21 and the mobile operator network 20, as depicted in Fig. 1.

After this, the extension device 22 is attached to the 3GPP device 21 over the near-field communication link 23. The attachment triggers the existing 3GPP device 21 to request the mobile operator network 20 for an activation of the additional primary PDP context 35. A description of the activation request is shown in

3GPP TS 24.008, Mobile radio interface Layer 3 specification, Core network protocols, http://www.3gpp.org/ftp/Specs/html-info/24008.htm,
herewith called D1. The activation request includes an address, which is usually an IP (Internet protocol) address.

The SGSN 25 receives the activation request, it may check for authentication and authorisation, and it may validate the activation request against a subscriber list. Upon successful validation, the mobile operator network 20 accepts the activation request and it assigns the requested address to the 3GPP device 21.

The existing 3GPP device 21 then behaves like a router and forwards data packets, which are destined for the newly assigned address, to the extension device 22. Conversely, the 3GPP device 21 forwards data packets originating from the extension device 22 to its destination.

After this, the 3GPP device 21 authorizes and authenticates access to network service by the extension device 22. The authorization or authentication is carried out by validating a personal pin number (PIN), which is provided by a user of the extension device 22.

The assigned IP address, in a broad sense, can be a dynamic address or a static address.

The authorization or authentication of the access to network services is performed by the extension device 22 and the 3GPP device 21 and can be carried out by a means, such as
i) validation of a username and a password, the username and the password being manually entered into the extension device,
ii) authorization based on a geographical location, the geographical location being determined by sensing means if the connection between the extension device and the existing 3GPP device is sufficiently short in range to prevent unwanted interception,
iii) validation of a biometric parameter, such as fingerprints,
iv) validation of a common key, which is previously stored in the extension devices, such as a shared secret code,
v) authorization based on symmetrical or asymmetrical encryption procedures, and
vi) different kinds of modules based on integrated chips, magnetic stripes, or RFID (radio frequency identification) devices, which can implement one of the methods mentioned in items v) and vi).

In another embodiment of Fig. 1, an extension device 22 is addressed by a network-wide unique IP address. A 3GPP device 21 obtains the network-wide unique IP address whilst the extension device 22 is assigned a static local IP address, which is associated with the network-wide unique IP address.

The 3GPP device 21 performs a network address translation (NAT) function between the local static IP address and the network-wide unique IP address. The 3GPP device 21 is also for storing the network-wide unique IP address.

In a downlink transfer, the 3GPP device 21 receives incoming data packets from the mobile operator network 20. The incoming data packets have the network-wide unique IP address as their destination addresses. The 3GPP device 21 translates a content of the destination address field of the incoming data packets from the network-wide unique IP address to the static local IP address. The 3GPP device 21 also forwards the incoming data packets to its destination address.

Similarly, in an uplink transfer, the 3GPP device 21 receives outgoing data packets from the extension device 22. The outgoing data packets have the static local IP address, as their source addresses. The 3GPP device 21 translates a content of source address field of the outgoing data packets from the static local IP address to the network-wide unique IP address. The 3GPP device 21 also forwards the outgoing data packets to their destination.

In a generic sense, the extension device 22 is a form of a user device. In a special case, the static IP address of the above example is replaced by a dynamic IP address, which is provided by a server, such as a Dynamic Host Configuration Protocol (DHCP) server. The 3GPP device 21 does not request for a specific static address.

A method of addressing the extension device 22 by the network-wide unique IP address is described below. The extension device 22 is assigned the dynamic local IP address whilst the 3GPP device 21 keeps the network-wide unique IP address.

Firstly, an activation of the primary PDP context 34 provides a connection between the 3GPP device 21 and the mobile operator network 20, as depicted in Fig. 1.

After this, the extension device 22 is attached to the 3GPP device 21. The attachment triggers the 3GPP device 21 to request for an additional activation of primary PDP context 35 from the mobile operator network 20. A description of the additional activation request is shown in document D1. The primary PDP context 35 includes an additional IP address.

The 3GPP device 21 then assigns a dynamic local IP address to the extension device 22. The dynamic IP address is local to a landscape of the 3GPP device 21.

Upon successful validation of the additional primary PDP activation request by the mobile operator network 20, the mobile operator network 20 accepts the additional activation request and assigns the network-wide unique IP address to the 3GPP device 21. The 3GPP device 21 later stores the network-wide unique IP address and keeps an association between the dynamic local IP address and the network-wide unique IP address.

After this, the 3GPP device 21 performs the network address translation (NAT) on data packets, which are received by the 3GPP device 21.

In the downlink transfer, the 3GPP device 21 receives the incoming data packets from the mobile operator network 20. The incoming data packets have the network-wide unique IP address as its destination address. The 3GPP device 21 then translates a content of the destination address field from the network-wide unique IP address to the dynamic local IP address. After this, the 3GPP device 21 forwards the incoming data packets to their destination.

Similarly, in the uplink transfer, the 3GPP device 21 receives the outgoing data packets from the extension device 22. The outgoing data packets have the dynamic local IP address, as their source addresses. After this, the 3GPP device 21 translates the content of source address field of the outgoing data packets from the dynamic local IP address to the network-wide unique IP address. Later, the 3GPP device 21 forwards the outgoing data packets to its destination.

In a generic sense, a router can replace the 3GPP device 21. Most routers include the function of the NAT. The step of assigning the dynamic local IP address to the extension device can occur after or before the step of successful validation of the additional activation request.

Figs. 2 to 5 comprise parts that are similar to the parts of the Fig. 1. The similar parts have the same name or the same part numeral. The description of the similar parts is incorporated by reference.

Fig. 2 illustrates addressing by a local IP address and a port mapping. An extension device obtains the local IP address whilst the port mapping is used to address the extension device.

A 3GPP mobile operator network 40 is connected to an existing 3GPP device 41, as depicted in Fig. 2. An extension device 42 is attached to a port 45 of the 3GPP device 41 by an IP over near-field communication link 43.

The 3GPP device 41 has a plurality of the ports 45. Each port 45 has a unique address. The port address is also called port number. Data flow from the SGSN 46 addressed to any port number in the range from m to n will be forwarded by the 3GPP device 41 to the extension device 42. The 3GPP device 41 is connected to a SGSN 46 of the mobile operator mobile 40 by a primary PDP context 47. The SGSN 46 is connected a GGSN 48.

A data flow 50 is transmitted between the SGSN 46 and the GGSN 48, between the SGSN 46 and the 3GPP device 41, and between the port 45 of the 3GPP device 41 and the extension device 42.

The port 45 is an hardware interface for communicating with the extension device 45. Data packets are sent through the interface.

The extension device 42 can have a local IP address that is assigned by the 3GPP device 41. The extension device 42 is addressed by an IP address of the 3GPP device 41 and the port address of the 3GPP device 41. The IP address is unique across the mobile operator network 40.

The 3GPP device 21 performs a network address and port translation (NAPT) function. The NAPT function translates between the local IP address and the IP address together with the port number.

The 3GPP device 21, in a downlink transfer, receives incoming data packets from the mobile operator network 40 and forwards the incoming network data packets to its destination. The incoming data packets include the IP address of the 3GPP device 41 and the port address as their destination addresses. The NAPT function translates this destination address to the local IP address.

The 3GPP device 21, in an uplink transfer, receives outgoing data packets from the extension device 42 and forwards the incoming data packets to their destination. The outgoing data packets include a local IP address as their source addresses. The NAPT function translates this source address to the IP address of the 3GPP device 41 and the port address.

A method of addressing the extension device 42 by the local IP address and the port mapping is shown below.

The connection between the 3GPP device 41 and the mobile operator network 40 is firstly provided by the primary PDP context 47, as depicted in Fig. 2.

Later, the extension device 42 is attached to the port 45 of the 3GPP device 41 over the near-field communication link 43. The 3GPP device 41 responds to the attachment by assigning the local IP address to the extension device 42 and associating its IP address together with an address of the port 45 to the local IP address. After this, the extension device 42 can be addressed by the IP address and the port address of the 3GPP device 41.

If the 3GPP device 41 receives incoming data-packets from the mobile operator network 40 destined for the 3GPP device and for the port address, the 3GPP device 41 performs the NAPT function for the incoming data packets, as described above.

Similarly, if the 3GPP device 41 receives outgoing data-packets from the extension device 42, the 3GPP device 41 performs the NAPT function for the outgoing data packets, as described above.

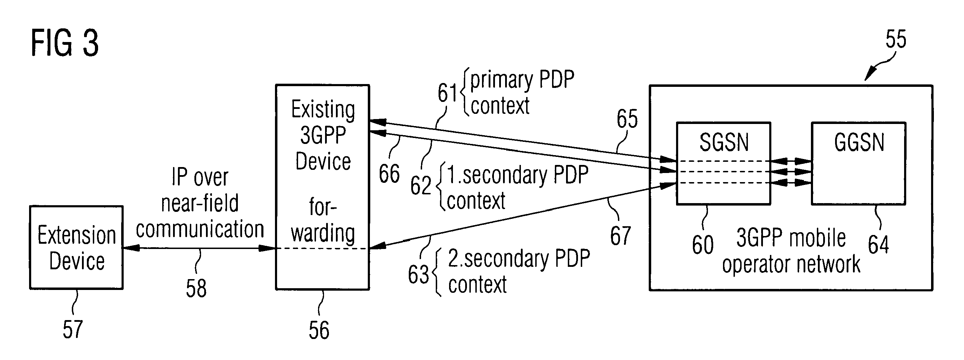

Fig. 3 illustrates addressing by a separate secondary PDP context.

A 3GPP mobile operator network 55 is depicted in Fig. 3. The mobile operator network 55 is connected to an existing 3GPP device 56, which is connected to an extension device 57 by an IP over near-field communication 58.

The mobile operator mobile 55 includes a SGSN 60 that is connected to a GGSN 64. The 3GPP device 56 is connected to the SGSN 60 by a primary PDP context 61, a secondary PDP context 62 and a separate secondary PDP context 63. A description of the secondary PDP contexts 62 and 63 is shown in

3GPP TS 23.060, General Packet Radio Service (GRPS), Service description, http://www.3gpp.org/ftp/Specs/html-info/23060.htm,
herewith called D2.

A data flow 65 is transmitted through the connection provided by the primary PDP context 61. The data flow 65 is sent between the SGSN 60 and the GGSN 64 and between the SGSN 60 and the 3GPP device 56.

Similarly, a data flow 66 is sent through the connection provided by the secondary PDP context 62. The data flow 66 is transmitted between the SGSN 60 and the GGSN 64, as well as between the SGSN 60 and the 3GPP device 56.

The separate secondary PDP context 63 provides the connection through which a data flow 67 is transmitted. The data flow 67 is transmitted between the SGSN 60 and the GGSN 64, between the SGSN 60 and the 3GPP device 56, as well as between the 3GPP device 56 and the extension device 57.

The secondary contexts 62 and 63 use addresses and other context information of the already active primary PDP context 61 but with different QoS (quality of service) profiles. A unique transaction identifier (TI) and a unique NSAPI (Network Service Access Point Identifier) may be used to identify the secondary contexts 62 and 63. The QoS profile describes a level of service performance.

A method of addressing the extension device 56 by the separate secondary PDP context 63 is described below.

Firstly, a connection is provided by the primary PDP context 61. The connection is between the 3GPP device 56 and the mobile operator network 55, as shown in Fig. 3.

The 3GPP device 56 later requests for activation of the secondary PDP contexts 66 and 67. The secondary PDP contexts 66 and 67 may have different QoS profiles.

After successful validation of the secondary PDP activation request, the mobile operator network 55 assigns the secondary PDP contexts 62 and 63 between the 3GPP device 56 and the SGSN 60.

The extension device 57 is afterward attached to the 3GPP device 56. Then, the 3GPP device 56 assigns the connection provided by the separate secondary PDP context 63 to the extension device 57. The separate secondary PDP context 63 provides a path for all data traffic to and from the extension device 57.

Afterwards, the extension device 42 can be addressed by the appropriate and separate secondary PDP context 63.

In a generic sense, the step of requesting for activation of the secondary PDP contexts 66 or 67 can be before or after the step of attaching the extension device 56 to the 3GPP device 56.

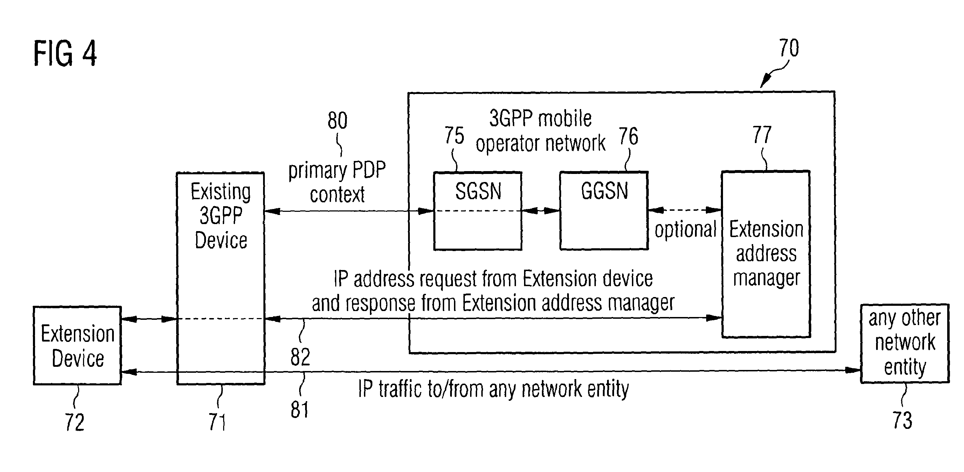

Fig. 4 illustrates addressing by a separate address manager for an extension device.

A 3GPP mobile operator network 70 is connected to an existing 3GPP device 71, which is connected to an extension device 72. The extension device 72 is connected to any other network entity 73.

The mobile operator network 70 includes a SGSN 75 that is connected to a GGSN 76. The GGSN 76 may be connected to an extension address manager 77.

The SGSN 75 is connected to the 3GPP device 71 by a connection that is provided by a primary PDP context 80. An IP traffic 81 flows between the extension device 72 and the any other network entity 73. A data flow 82 is provided between the extension address manager 77 and the 3GPP device 71, as well as between the 3GPP device 71 and the extension device 72.

The extension address manager 77 is a network instance that manages a pool of IP addresses. The any other network entity 73 is part of the mobile operator network 70. The IP traffic 81 transports data packets between the extension device 72 and the any other network entity 73.

In a generic sense, the any other network 73 may be not a part of the mobile network 70. The extension address manager 77 together with the GGSN 76 may manage the pool of IP addresses.

A method of addressing using the separate extension address manager 77 for the extension device 72 is shown below.

Firstly, a connection between the 3GPP device 71 and the SGSN 75 is provided by the primary PDP context 80. The primary PDP context 80 provides the 3GPP device 71 with an IP address and corresponding context.

After this, the 3GPP device 71 uses the connection provided by the primary PDP context 80 to request for another IP address for the extension device 72 from the extension address manager 77.

The extension address manager 77 then responds to the request by sending the another IP address from its pool of IP addresses and corresponding additional information, such as address of DNS (Directory Name Service) sever, and address of default gateway to the requesting 3GPP device 71.

After this, the 3GPP device 71 receives the requested IP address and corresponding information. The 3GPP device 71 forwards the received information to the extension device 72. The extension device 72 is then able to communicate by IP with the any other network entity 73.

If traffic of the extension device 72 uses the same air interface as traffic of the corresponding 3GPP device 71, it may happen that the QoS profile of the existing primary PDP context 80 is not appropriate. In this case, the QoS profile should be re-negotiated.

In a generic sense, more than one extension devices 72 may be connected to the 3GPP device 71. The 3GPP device 71 may use the connection provided by the primary PDP context 80 to request for more than one IP addresses for the more than one extension devices 72 from the extension address manager 77. The extension address manager 77 may respond by transmitting more than one IP address from its pool of IP addresses.

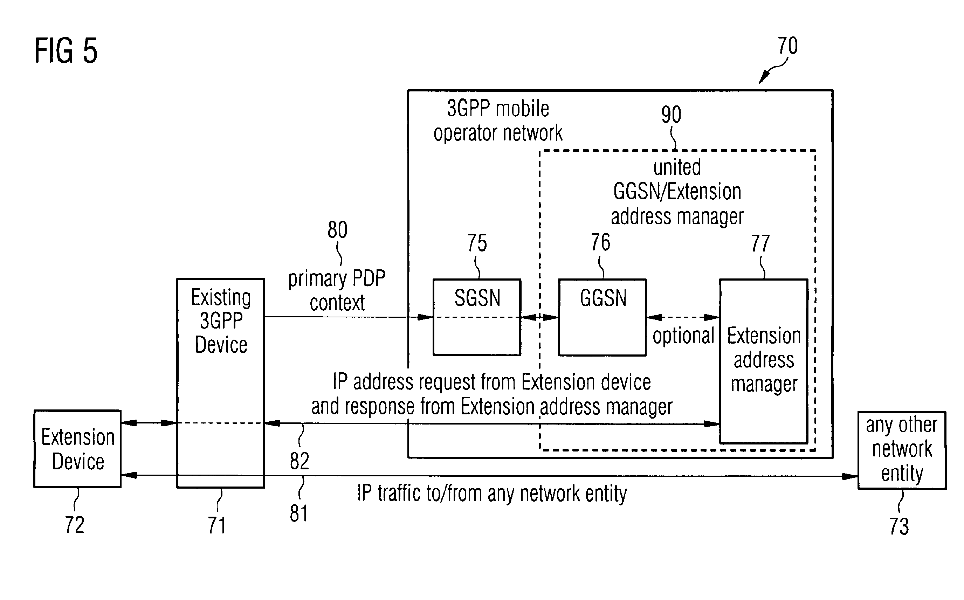

The extension address manager 77 can be united with the GGSN 76 to form a single entity 90, as illustrated in Fig. 5. The functionalities of the extension address manager 77 and the GGSN 76 are merged in the single entity 90 with a common IP address.

The single entity 90 makes the request of the IP addresses from the 3GPP device 71 to the extension address manager 77 a simpler task, since the IP address of the GGSN 76 is already published during the establishment of the primary PDP context 80. Otherwise, the PDP context 80 would have to be extended by a specification of the IP address or the domain name of the extension address manager 77.

The address pool of the extension address manager 77 can be distinct from the address pool of the GGSN 76. In this case, the 3GPP device 71 and its extension devices 72 can operate with IP addresses of different subnets. The network operator can use this distinction for assigning different access rights to different extension device types or different 3GPP device types. It can also be used for implementing other differentiation between the said device types.

In short, the application provides a means of connecting an extension device to an existing 3GPP mobile operator network. This connection is supported by functional support of existing 3GPP device. The extension device and the existing 3GPP device have similar manner of access to packet data services. Authorization of the extension device relies on support from authorization of existing 3GPP device.

### List of abbreviations

- 3GPP: Third Generation Partner Project
- DHCP: dynamic host configuration protocol
- DNS: Directory Name Service
- GGSN: Gateway GPRS Support Node
- GPRS: General Packet Radio Services
- GSM: Global System for Mobile Communications
- HTTP: hypertext transport protocol
- IP: Internet protocol
- IrDA: infra-red data association
- MS: mobile station
- NAPT: network address and port translation
- NAT: network address translation
- NSAPI: Network Service Access Point Identifier
- PDP: packet data protocol
- PIN: personal identification number
- QoS: quality of service
- RFID: radio frequency identification
- SGSN: Serving GPRS Support Node
- SIM: subscriber identity module
- SIP: session initiation protocol
- TCP: transmission control protocol
- TI: transaction identifier
- UDP: User Datagram Protocol
- UICC: Universal Integrated Circuit Card
- UOP: user datagram protocol
- WLAN: wireless local area network
- UMTS: Universal Mobile Telecommunications System

### Reference numbers

- 20: 3GPP (Third Generation Partner Project) mobile operator network
- 21: 3GPP device
- 22: extension device
- 23: communication link
- 25: Serving GPRS Support Node (SGSN)
- 26: Gateway GPRS Support Node (GGSN)
- 27: wireless channel
- 30: data flow
- 31: data flow
- 34: primary PDP context
- 35: primary PDP context
- 40: 3GPP mobile operator network
- 41: 3GPP device
- 42: extension device
- 43: near-field communication link
- 45: port
- 46: SGSN
- 47: primary PDP context
- 48: GGSN
- 50: data flow
- 55: 3GPP mobile operator network
- 56: 3GPP device
- 57: extension device
- 58: near-field communication link
- 60: SGSN
- 61: primary PDP context
- 62: secondary PDP context
- 63: separate secondary PDP context
- 64: GGSN
- 65: data flow
- 66: data flow
- 67: data flow
- 70: 3GPP mobile operator network
- 71: 3GPP device
- 72: extension device
- 73: any other network entity
- 75: SGSN
- 76: GGSN
- 77: extension address manager
- 80: primary PDP context
- 90: single entity

## Claims

1. A method of addressing an extension device of a mobile telecommunication system, the extension device being devoid of a subscriber identifier, the mobile telecommunication system comprises a core network and a mobile station, the mobile station being connected to the core network and to the extension device, the method comprising the step of assigning an address for the extension device by the mobile station.

2. The method according to claim 1
**characterised in that**
the address assigned for the extension device is unique across the mobile telecommunication system.

3. The method according to claim 1 or 2
**characterised in that** the connection between the mobile station and the core network is provided by a primary PDP context.

4. The method according to claim 1
**characterised in that** the method comprises the further step of performing a network address translation between a local IP address and a network-wide unique address for data packets received by the mobile station, and the address assigned for the extension device comprises the local IP address.

5. The method of claim 4
**characterised in that**
the mobile station maintains an association between the network-wide unique IP address and the local IP address.

6. The method according to claim 1
**characterised in that**
the method comprises the further step of performing a network address and port translation between a local IP address and a port number for data packets, the data packets are received by the mobile station, the extension device is connected to the port, and the address assigned to the extension device comprises the local IP address.

7. The method according to claim 6
**characterised in that** the mobile station stores an association between the local IP address and the address of the mobile station together with the port number.

8. The method according to claim 1
**characterised in that** the method comprises the further step of addressing the extension device by a connection provided by a secondary PDP context between the mobile station and the core network.

9. The method according to claim 1
**characterised in that**
the address is provided by an address manager.

10. The method according to claim 9
**characterised in that** the address manager provides context information for providing a connection between a network entity and the extension device.

11. A mobile telecommunication system, which comprises a mobile station for assigning an address to an extension, the extension is devoid of a subscriber identifier, and the mobile station is connected to a core network of the mobile telecommunication system.

12. The mobile telecommunication system according to claim 11
**characterised in that**
the address comprises an IP address.

13. The mobile telecommunication system according to claim 11 or 12
**characterised in that**
the mobile telecommunication system comprises a 3GPP mobile operator network.

14. The mobile telecommunication system according to claim 13
**characterised in that** the core network comprises a SGSN (Serving GPRS Support Node) and a GGSN (Gateway GPRS Support Node), and the GGSN is connected to the SGSN.

15. The mobile telecommunication system according to claim 13 or 14
**characterised in that**
the mobile station comprises a 3GPP device.

16. The mobile telecommunication system according to one of the claims 13 to 15
**characterised in that**
the subscriber identifier comprises a SIM (subscriber identity module) or a UICC (Universal Integrated Circuit Card).

17. The mobile telecommunication system according to one of the claims 13 to 16
**characterised in that**
the connection between the 3GPP device and the core network is provided by a primary PDP context.

18. The mobile telecommunication system according to one of the claims 13 to 17
**characterised in that**
the address is provided by an address manager.

19. The mobile telecommunication system according to claim 18
**characterised in that**
the address manager is unified with the GGSN to form a single entity.
